# EUROPEAN PATENT APPLICATION

(11) **EP 4 785 797 A1**
(43) Date of publication of application: **05.08.2026**
(21) Application number: 25155366.5
(22) Date of filing: 31.01.2025
(51) Int. Cl.: A22B 5/00

(54) **CAPTURING AN IMAGE OF AN ABDOMINAL INTERIOR OF A GUTTED FISH**

(71) Applicant: Marel Iceland EHF, 210 Gardabaer (IS); Marel Salmon A/S, 9530 Støvring (DK)
(72) Inventor: ÓLAFSSON, Sindri, 210 Gardabaer (IS); ANDERSEN, Martin, 9530 Stoevring (DK)
(74) Representative: Laddé, Jurre Gerard

(57) **Abstract**

A system (2) for capturing an image of an abdominal interior (8) of a gutted fish (4) is disclosed. As referred to herein, an abdominal interior (8) of a gutted fish (4) is the interior of the abdominal cavity of the gutted fish (4). The system (2) comprises a ventral flap separator system (6) that is configured to separate ventral flaps (12a, 12b) of the fish (4) herewith exposing the abdominal interior (8) of the gutted fish (4). The system (2) also comprises an imaging system (14) that is configured to capture an image of the exposed abdominal interior (8). Further, the imaging system (14) comprises a line-scan camera.

## Description

### FIELD OF THE INVENTION

This disclosure relates to a system for capturing an image of an interior of an abdominal cavity of a gutted fish, in particular to such system comprising a line-scan camera. This disclosure further relates to a fish gutting system comprising such system for capturing an image and to a method for capturing an image of an abdominal interior.

### BACKGROUND

US2019116810 discloses an apparatus for optical inspection of the opened abdominal cavity of gutted fish. The apparatus comprises an optical imaging system configured to take images of abdominal cavity regions of the fish. A disadvantage of this apparatus is that the images taken by the optical imaging system provide a limited view of the abdominal cavity. Hence, there is a need in the art for a system that can take images giving a more comprehensive view of the abdominal interior.

### SUMMARY

Therefore, a system for capturing an image of an abdominal interior is disclosed. As referred to herein, an abdominal interior of a gutted fish is the interior of the abdominal cavity of the gutted fish. The system comprises a ventral flap separator system that is configured to separate ventral flaps of the fish herewith exposing the abdominal interior of the gutted fish. The system also comprises an imaging system that is configured to capture an image of the exposed abdominal interior. Further, the imaging system comprises a line-scan camera.

This system is advantageous in that it enables to capture an image in which the abdominal cavity is clearly visible. Typically, at the start of the gutting procedure, an incision is made along the ventral side of the fish from the anal vent to the gills. This incision allows one or more gutting tools to enter the abdominal cavity of the fish and remove the internal organs there. An example of a gutting tool is a suction nozzle that is configured to remove organs out of the abdominal cavity using negative pressure. Thus, a gutted fish has an opened abdominal cavity. However, the interior of the abdominal cavity, also referred to as the abdominal interior, of a gutted fish is not readily visible as the ventral flaps tend to fold back to each other after the gutting procedure and block the imaging system's view on the abdominal interior. The ventral flaps of the fish may be understood to refer to the parts of the fish that sit on either side of the incision. Therefore, to be able to capture a clear image of the abdominal interior, the system disclosed herein comprises a ventral flap separator system that is configured to separate these flaps to expose the abdominal interior which, given that the fish has been gutted, should be free of organs and organ residues. The ventral flap separator system is preferably relatively small so that it does not block the imaging system's view on the abdominal interior. Further, using a large ventral flap separator system that separates the ventral flaps along a substantial length increases the risk of damaging the fish, especially if the fish is relatively small. On the other hand, a small ventral flap separator system will separate the ventral flaps along a relatively small length, which means that the ventral flaps are only locally separated from each other and that elsewhere along the length of the fish, the ventral flaps will sit closer to each other and obstruct the view on the abdominal interior. The line-scan camera is advantageous in that it captures, in each scan, a line image of a relatively narrow area and can therefore capture, in each scan, an image of an area near the ventral flap separator system where the ventral flaps are well-separated from each other. This way, areas where the ventral flaps sit close to each other and that do not provide a clear view on the abdominal interior are not imaged. Hence, the system disclosed herein, in particular the line-scan camera, allows to use a ventral flap separator system that only locally separates the ventral flaps while still being able to capture an image that only shows areas with well-separated ventral flaps.

The line-scan camera may comprise one or more rows of sensor pixels. If the line-scan camera comprises multiple rows or, in other words, a 2D array of sensor pixels, only a single row within the 2D array may be active while the line-scan camera is performing its function. Alternatively, multiple rows within the 2D array may be active while the line-scan camera is performing its function, such as two, three, four, five, or more rows within the 2D array. The line-scan camera is for example a standard RGB camera comprising a 2D array of RGB sensor pixels. As referred to herein, a sensor pixel may comprise several subpixels, which is typically the case if the sensor pixel is an RGB sensor pixel. A row of sensor pixels being active may be understood to refer to each sensor pixel in that array outputting electrical signals representing a radiant energy value of light received by the sensor pixel in question, wherein an image, such as a line image, is subsequently formed based on the electrical signals output by the sensor pixels in the active row.

The ventral flap separator system may be configured to move the ventral flaps relative to each other along a direction perpendicular to the head-tail axis of the fish, and preferably also parallel to the frontal plane of the fish. The frontal plane is the plane that divides the fish into a dorsal portion and a ventral portion. As used herein, the term 'frontal plane of the fish' may be understood to refer to the plane that coincides with the fish's frontal plane when the fish is positioned for abdominal interior imaging by the imaging system.

In an embodiment, the line-scan camera is configured to capture the image of the exposed abdominal interior by sequentially capturing line images of respective parts of the exposed abdominal interior.

The line-scan camera would typically have a field of view volume that has a line-shaped cross-section in the frontal pane of the fish. As referred to herein, field of view volume may be understood to refer to the three-dimensional space as seen by a camera. The width of the line-shaped cross-section preferably extends in a direction perpendicular to head-tail axis of the fish.

In an embodiment, the line-scan camera is configured to stitch the captured line images together to form the image of the exposed abdominal interior.

Preferably, there is no overlap or only limited overlap between consecutively captured line images. In other words, the imaged respective parts of the exposed abdominal interior preferably do not overlap or only to a limited extent. This obviates the need to crop line images when the line images are stitched together to form the image of the abdominal interior and thus reduces and/or speeds up the data processing that is required for forming the image.

In an embodiment, the ventral flap separator system is configured to locally separate the ventral flaps at a first position along a length of the fish herewith exposing a first part of the abdominal interior and thereafter locally separate the ventral flap at a second position along the length of the fish herewith exposing a second part of the abdominal interior. The second position is different from the first position. The line-scan camera is configured to capture a first line image of the exposed first part of the abdominal interior and a second line image of the exposed second part of the abdominal interior. This embodiment is advantageous in that the ventral flaps, at each time a line image is taken, are separated only locally.

The direction along which the length of the fish extends may be referred to as the longitudinal direction. In an embodiment, the system comprises a conveyor system that is configured to move the gutted fish along the longitudinal direction relative to the ventral flap separator system so that the ventral flap separator system locally separates the ventral flaps at a progressing position along the length of the fish herewith exposing respective parts of the abdominal interior. In this embodiment, the line-scan camera is thus configured to sequentially capture line images of the respective parts of the abdominal interior that are exposed by the ventral flap system locally separating the ventral flaps at the progressing position.

This embodiment allows for a smooth process. Preferably, the progressing position along the length of the fish may move at a constant speed. For example, the ventral flap separator system may be static relative to earth, at least when the ventral flap separator is active, and the conveyor system may move the fish past the ventral flap separator system at a constant speed. The conveyor system is for example configured to move the gutted fish relative to the ventral flap separator system at a speed of at least 10 cm per second, preferably of at least 15 cm per second, more preferably of at least 20 cm per second, even more preferably of at least 30 cm per second.

In an embodiment, the line-scan camera is configured to sequentially capture line images of an area having a fixed position relative to the ventral flap separator system when the ventral flap separator system is locally separating the ventral flap at the progressing position along the length of the fish.

Thus, the field of view volume of the line-scan camera may be static relative to the ventral flap separator system when the ventral flap separator system is locally separating the ventral flap at the progressing position along the length of the fish.

This embodiment allows to ensure that each line image is taken of a part of the fish where the ventral flaps are duly separated by the ventral flap separator system.

In an embodiment, each line image has an image width and an image height, wherein a ratio between the image width and image height is at least 5, preferably at least 10, more preferably at least 20, most preferably at least 50.

Image width and image height may be expressed in number of image pixels. In principle, the smaller the image height, the smaller the height of the field of view volume's cross-section in the frontal plane of the fish and the better it can be ensured that each line image is taken of a part of the fish where the ventral flaps are duly separated. If the image height would be substantial, then the height of the field of view volume's cross-section in the frontal plane of the fish would be substantial increasing the likelihood that also parts of the fish are imaged where the ventral flaps are not properly separated.

In an embodiment, the image height of each line image is at most 5 image pixels.

As explained above, the line-scan camera has a field of view volume. In an embodiment, a cross-section of the field of view volume in a frontal plane of the fish is shaped as a line having a height and a width, the width being at least 5 times greater, preferably at least 10 times greater, more preferably at least 20 times greater, most preferably at least 50 times greater, than the height and the height being at most 2 mm, preferably at most 1 mm, more preferably at most 0.5 mm.

This embodiment is advantageous in that only parts of the fish are imaged where the ventral flaps are well-separated and offer a comprehensive view on the abdominal interior.

In an embodiment, an optical axis of the line-scan camera makes an angle between 30 and 75 degrees with a frontal plane of the fish and/or with a horizontal plane, preferably between 45 and 60 degrees, more preferably between 50 and 55 degrees.

This embodiment advantageously allows to image parts of the abdominal interior of the fish that sit for example vertically straight below a part of the head of the fish. A portion of the abdominal cavity is located beneath the head of the fish meaning that when viewed from directly above in a vertical downward direction, the head, which is still intact, would block the view on this portion of the abdominal cavity. However, the optical axis of the line-scan camera making an angle with the frontal plane of the fish allows to image this portion as well. In addition, the ventral flap separator system might also block part of the view on the abdominal cavity. Having the optical axis of the line-scan camera at an angle facilitates looking into the abdominal cavity without interference from the ventral flap separator.

The frontal plane of the fish is typically a horizontal plane. Further, as viewed in a direction perpendicular to the frontal plane and/or perpendicular to the horizontal plane, the optical axis of the line-scan camera preferably coincides with a head-tail axis of the fish.

Preferably, a direction along the optical axis of the line-scan camera from the frontal plane of the fish to the line-scan camera makes an angle with the head-to-tail direction along the longitudinal axis of the fish, wherein the angle is between 30 and 75 degrees, preferably between 45 and 60 degrees, more preferably between 50 and 55 degrees.

In an embodiment, the line-scan camera is configured to capture at least 300 line images per second, preferably at least 750 line images per second, more preferably at least 1000 line images per second. Alternatively or additionally, the line scan camera is configured to capture at least 1 line image per 10 mm displacement of the fish relative to the line-scan camera, preferably at least 1 line image per 5 mm displacement of the fish relative to the line-scan camera, and more preferably 1 line image per mm displacement of the fish relative to the line-scan camera. Such line acquisition rates are beneficial in that they allow to scan the abdominal interior of the fish fast and/or at high resolutions.

In an embodiment, the system comprises one or more light sources configured to illuminate the exposed abdominal interior. Preferably, the system comprises multiple light sources so that the exposed abdominal interior can be illuminated from different angles. This allows to illuminate the abdominal interior homogeneously. The one or more light sources may be configured to illuminate the exposed abdominal interior with white light.

One aspect of this disclosure relates to a fish gutting system that comprises one or more gutting tools for gutting a fish, and any of the systems disclosed herein for capturing an image of an abdominal interior of a fish, and a data processing system that is configured to perform a step of determining, based on the captured image of the exposed abdominal interior, that the fish has been properly gutted.

An important reason for capturing an image of the abdominal interior of a gutted fish is that such image can be analyzed for quality inspection. Based on the image of the exposed abdominal interior can it be verified that all internal organs have been properly removed from the abdominal cavity.

The data processing system may further be configured to perform a step of, based on determining that the fish has been properly gutted, allowing the fish to proceed in a default manner.

The data processing system may also be configured to perform a step of determining, based on the captured image of the exposed abdominal interior, that the fish has not been properly gutted. This step may comprise the data processing system analyzing the captured image and identifying an image region in the image that represents an organ of the fish that should have been removed during the gutting process. Preferably, the data processing system is also configured to determine a quality of gutting. Depending on the quality of gutting, the fish can be flagged and/or rejected to, for instance, a manual cleaning table. In other words, the data processing system might be configured to trigger a rejection step if the fish has not been properly gutted. It is understood that a rejection step typically refers to the step of taking the fish out of the processing line, for instance to be gutted further at a manual gutting station.

One aspect of this disclosure relates to a method for capturing an image of an abdominal interior, i.e. an interior of an abdominal cavity, of a gutted fish. In this aspect, the method comprises a line-scan camera capturing the image of the abdominal interior. This method is advantageous in that it allows to use a ventral flap separator system that only locally separates the ventral flaps of the fish while still allowing to capture a good image of the abdominal interior of the fish. A further advantage is that a line-scan camera typically yields a high-resolution image even if the fish is moving past it at considerable speed. This allows for fast and accurate quality inspection.

In an embodiment, the method comprises separating ventral flaps of the fish herewith exposing the abdominal interior of the gutted fish, and the line-scan camera capturing the image of the exposed abdominal interior.

In an embodiment, the method comprises locally separating the ventral flaps at a first position along a length of the fish herewith exposing a first part of the abdominal interior, and the line-scan camera capturing a first line image of the exposed first part of the abdominal interior, and then locally separating the ventral flap at a second position along the length of the fish herewith exposing a second part of the abdominal interior, the second position being different from the first position, and the line-scan camera capturing a second line image of the exposed second part of the abdominal interior.

In an embodiment, the method comprises locally separating the ventral flaps at a progressing position along the length of the fish herewith exposing respective parts of the abdominal interior and sequentially capturing line images of the exposed respective parts of the abdominal interior.

One aspect of this disclosure relates to a computer-implemented method comprising the step of determining, based on the captured image of the exposed abdominal interior, that the fish has been properly gutted.

In an embodiment, the computer-implemented method comprises allowing, based on determining that the fish has been properly gutted, the fish to proceed in a default manner. Additionally or alternatively, the computer-implemented method comprises determining, based on the captured image of the exposed abdominal interior, that the fish has not been properly gutted. This step may comprise analyzing the captured image and identifying an image region in the image that represents an organ of the fish that should have been removed during the gutting process. The computer-implement may determine a quality of gutting. Depending on the quality of gutting, the fish can be flagged and/or rejected to, for instance, a manual cleaning table. In other words, the data processing system might be configured to trigger a rejection step if the fish has not been properly gutted. It is understood that a rejection step typically refers to the step of taking the fish out of the processing line, for instance to be gutted further at a manual gutting station.

It should be appreciated that any determination based on an image referred to herein and/or any identification of an image region in an image referred to herein may be performed based on a model that has been constructed using machine learning methods known in the art.

One aspect of this disclosure relates to a computer program comprising instructions which, when the program is executed by a computer, cause the computer to carry out any of the computer-implemented methods described herein.

One aspect of this disclosure relates to a computer-readable data carrier having stored thereon any of the computer programs described herein. The computer-readable data carrier may be hard disk, for example, or a signal.

One aspect of this disclosure relates to a computer readable storage medium having computer readable program code embodied therewith, and a processor, preferably a microprocessor, coupled to the computer readable storage medium, wherein responsive to executing the computer readable program code, the processor is configured to perform any of the computer-implemented methods described herein.

One aspect of this disclosure relates to a non-transitory computer-readable storage medium storing at least one software code portion, the software code portion, when executed or processed by a computer, is configured to perform any of the computer-implemented methods described herein.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 is a side view on a system for capturing an image of an abdominal interior according to an embodiment;
FIG. 2A is an angled, more realistic view on the system of figure 1;
FIG. 2B is another angled view on the system of figure 2A;
FIG. 2C is another angled view on the system of figure 2A;
FIG. 2D is another angled view on the system of figure 2A;
FIG. 3 is a drawing illustrating the longitudinal axis and the frontal plane of a fish;
FIG. 4 illustrates how different parts of the abdominal interior are imaged with a line-scan camera according to an embodiment;
FIG. 5 shows the image that results from the procedure illustrated in figure 4;
FIG. 6 illustrates how different parts of the abdominal interior may be imaged with a camera not being a line-scan camera;
FIG. 7 shows the image that results from the procedure illustrated in figure 6;
FIG. 8 shows an actual image obtainable by a system according to an embodiment;
FIG. 9 illustrates a data processing system according to an embodiment.

### DETAILED DESCRIPTION OF THE DRAWINGS

In the figures, identical reference numbers indicate identical or similar elements.

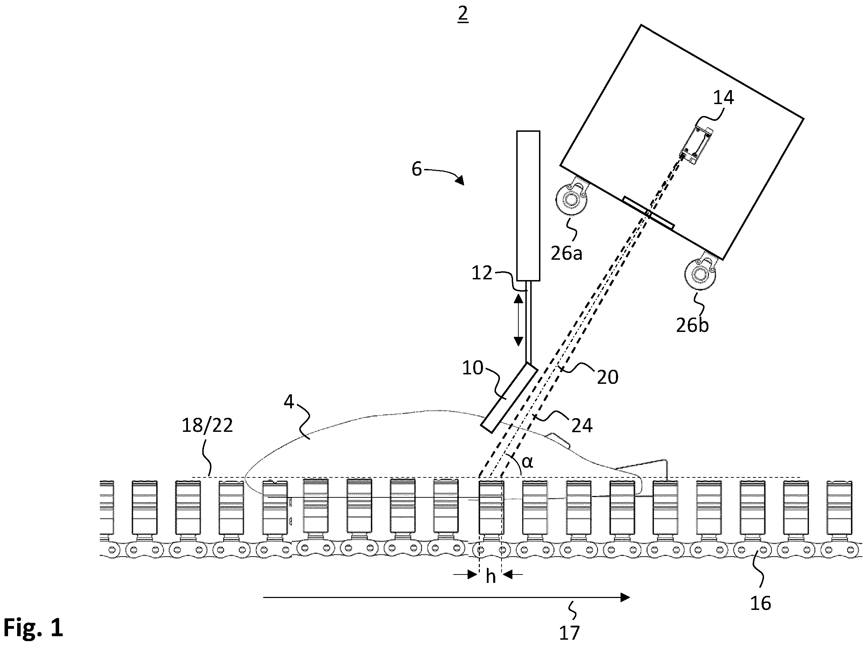

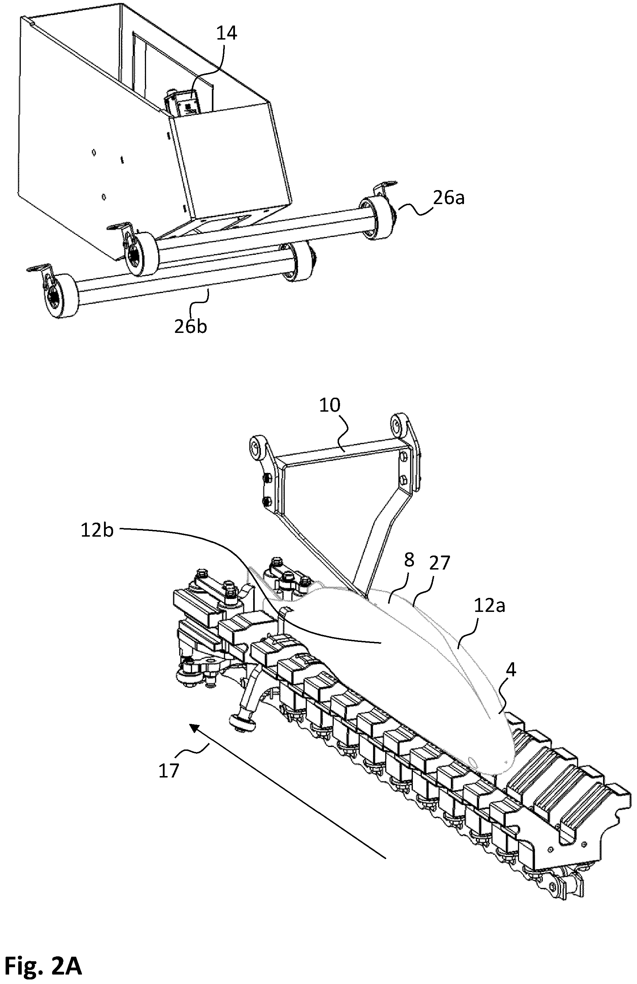

Figure 1 illustrates a system 2 according to an embodiment for capturing an image of an abdominal interior of a gutted fish 4. The system 2 comprises a ventral flap separator system 6 that is configured to separate ventral flaps of the fish herewith exposing the abdominal interior of the gutted fish 4. The depicted ventral flap separator system 6 comprises a ventral flap separator element 10 that is movable upwards and downwards, in this example because it is connected to a shaft 12 that is movable upwards and downwards. This way, can the separator element 10 move into and out of the abdominal interior of the gutted fish. Figures 2A - 2D show the embodiment of figure 1 from respective angled viewpoints and depict a more concrete embodiment of the ventral flap separator element 10. As shown in figures 2A - 2D, the ventral flap separator element 10 may be embodied as substantially V-shaped spreading bow 10. As the spreading bow 10 moves upwards and downwards, it moves into and out of the abdominal interior 8 of the gutted fish 4. Due to the V-shape, the ventral flaps 12a and 12b are separated which exposes the abdominal interior 8.

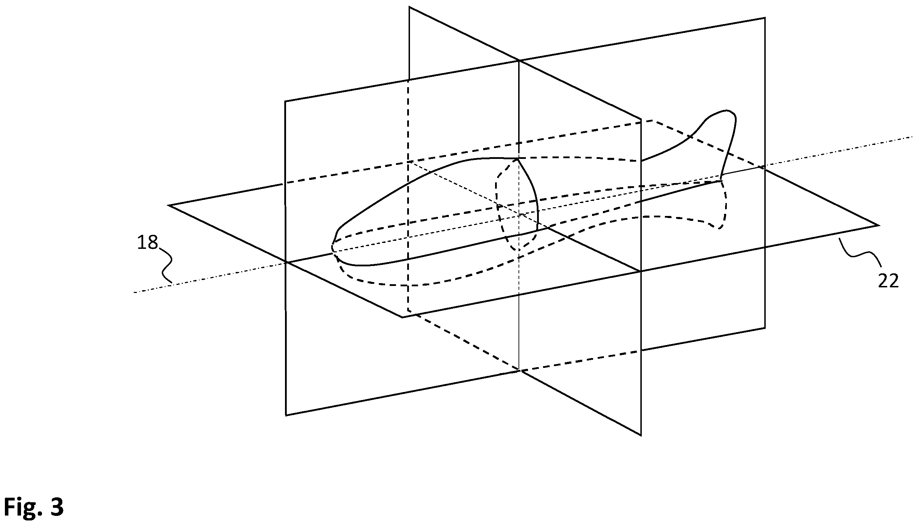

The ventral flap separator system 6 is configured to locally separate the ventral flaps at various positions along the length of the fish herewith exposing respective various parts of the abdominal interior 8. To this end, in the embodiment shown in figures 1 and 2A - 2D, the system comprises a conveyor system 16 that is configured the move the fish. Preferably, as shown, the conveyor system 16 is configured to move the gutted fish 4 in a direction 17 parallel to the longitudinal axis 18 of the fish (also see figure 3), in particular in the head-to-tail direction. The ventral flap separator system 6 may be configured to hold the ventral flap separator element 10 still (relative to earth) while the element 10 sits in the abdominal interior 8 of the gutted fish and while the gutted fish 4 moves (relative to earth) in direction 17. This way, the ventral flap separator system 6 locally separates the ventral flaps 12a, 12b at a progressing position along the length of the fish. Herewith, respective parts of the abdominal interior 8 are exposed at different times.

The system 2 comprises an imaging system 14 that is configured to capture an image of the exposed abdominal interior 8. Importantly, the imaging system 14 comprises a line-scan camera. The line-scan camera is configured to sequentially capture line images of the exposed respective parts of the abdominal interior 8.

As visible in figure 1, the optical axis of the line-scan camera makes an angle α with the frontal plane 22 of the gutted fish (also refer to figure 3). Typically, the frontal plane of the fish is a horizontal plane, but this is not strictly required. Angle α is for example between 30 and 75 degrees, preferably between 45 and 60 degrees, more preferably between 50 and 55 degrees. This angle allows the line-scan camera to also see parts of the abdominal interior 8 that sit straight below the (unopened part of the) head.

As indicated in figure 1, the line-scan camera has a field of view volume 24. The cross-section of the field of view volume 24 in the frontal plane 22 is shaped as a line having a height and a width. This width would typically be at least 5 times greater, preferably at least 10 times greater, more preferably at least 20 times greater, most preferably at least 50 times greater, than the height. Further, the height is indicated in figure 1 as "h" and is preferably at most 2 mm, preferably at most 1 mm, more preferably at most 0.5 mm.

The system 2 comprises one or more light sources 26a, 26b configured to illuminate the exposed abdominal interior. These light sources may illuminate bright white light and preferably illuminate the exposed abdominal interior homogeneously so that a high-quality image can be captured.

The light sources 26a, 26b are preferably positioned close to the line scan camera so that the light travelling from the light sources 26a, 26b to the fish 4 and from the fish 4 back to the line scan camera travel, to some extent along the optical axis. Further, although not shown in the figures, the system 2 preferably comprises at least one light source straight above the imaged area.

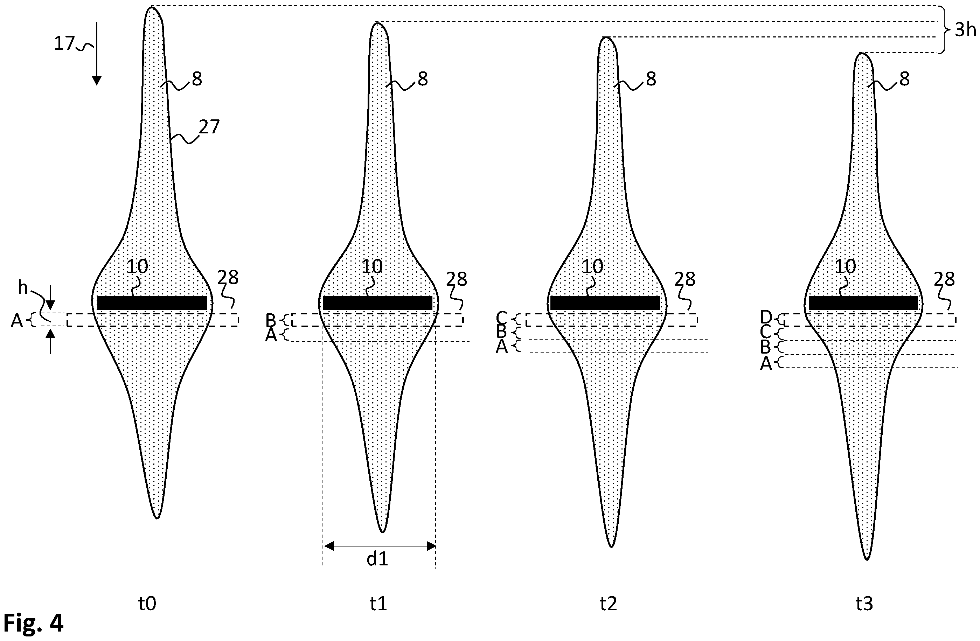

The system 2 for capturing an image of an abdominal interior of a gutted fish allows to capture an image comprehensively showing the abdominal interior of a gutted fish even when the ventral flap separator system only locally separates the ventral flaps. This will be explained in more detail with reference to figures 4, 5, 6.

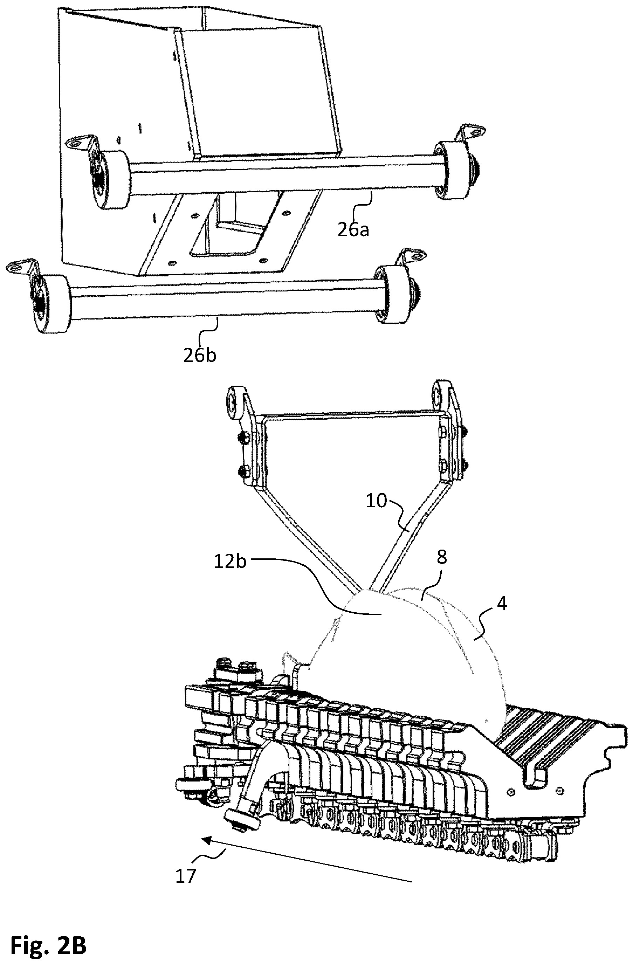

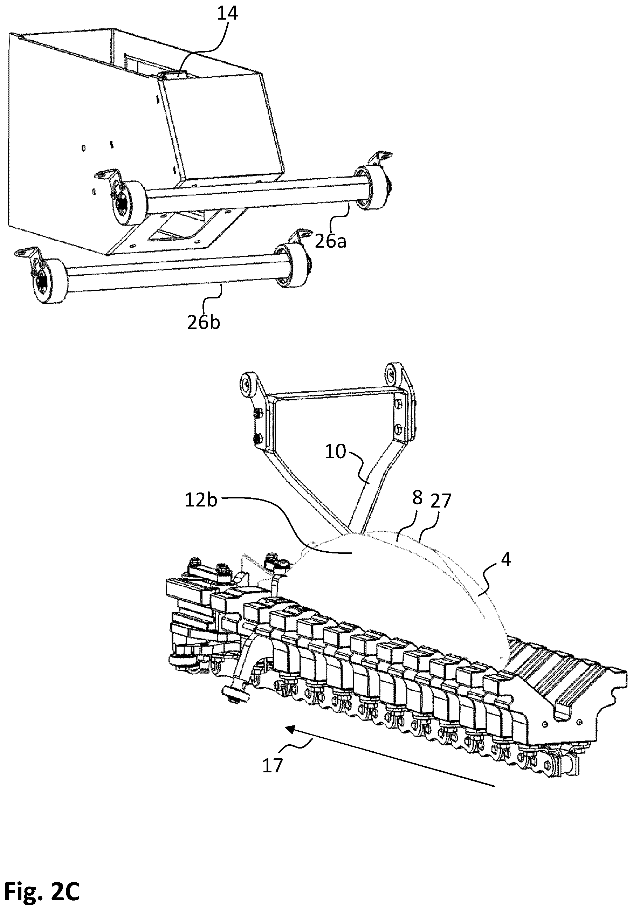

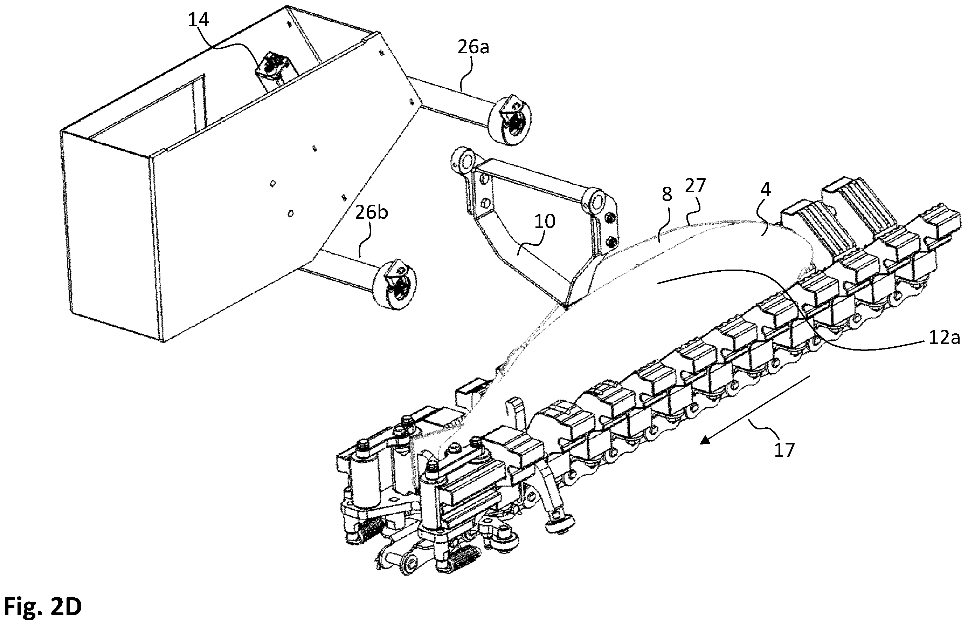

Figure 4 shows how the ventral flap separator system, in particular its element 10, may locally separate the ventral flaps at four subsequent times t0, t1, t2, t3 at four respective different positions along the length of the fish. The ventral flap element 10 remains static, while the gutted fish travels in direction 17. For clarity, only the edge 27 of the opening that gives access to the abdominal interior 8 is shown, not the entire fish. (Edge 27 is also visible in figures 2B, 2C, 2D.) Between time t0 and time t3, the fish has travelled over a distance 3h in direction 17. Figure 4 also shows an area 28 of which the line-scan camera is configured to capture an image. As is clear from figure 4, the area 28 has a fixed position relative to the ventral flap separator element 10 while the element 10 is locally separating the ventral flaps at a progression position along the length of the fish. Further, the area 28 has a height h. This height may for example be smaller than 0.5 mm.

At time t0, the line-scan camera captures a line image of part A of the abdominal interior 8. At time t1, the line-scan camera captures a line image of part B of the abdominal interior 8. At time t2, the line-scan camera captures a line image of part C of the abdominal interior 8. At time t3, the line-scan camera captures a line image of part D of the abdominal interior 8. Each line image has an image width and an image height, wherein a ratio between the image width and image height is at least 5, preferably at least 10, more preferably at least 20, most preferably at least 50.

The line-scan camera may be configured to capture at least 300 line images per second, in which case the difference between t0 and t1 (and between t1 and t2, and between t2 and t3) is approximately 0.003 seconds.

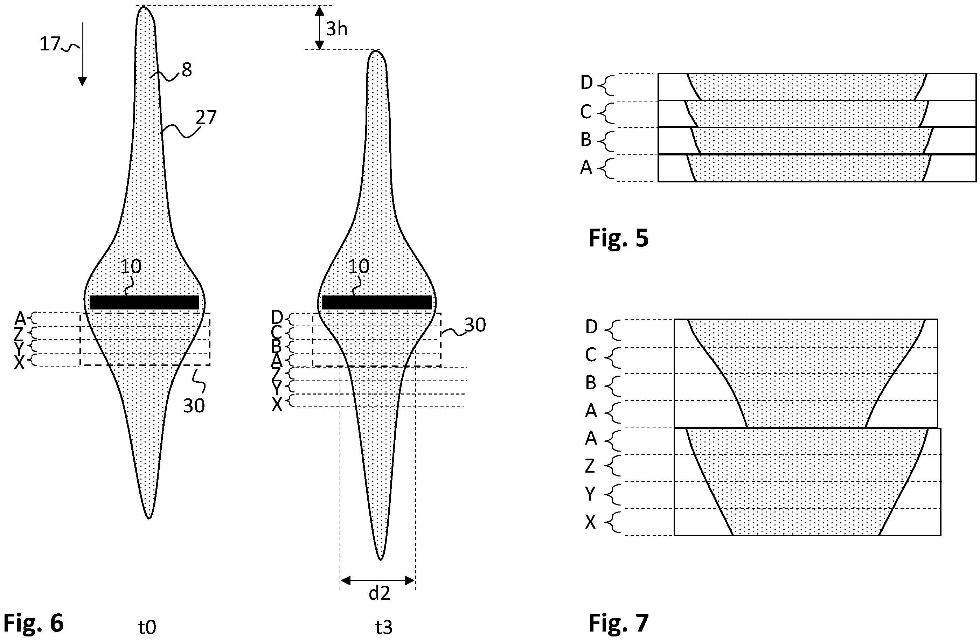

Figure 5 schematically shows the image that is formed using the procedure of figure 4, i.e. by stitching the four line images respectively captured at t0, t1, t2, t3 together. Note that line images showing parts B and C of the abdominal interior show these parts in a state in which the ventral flaps at these parts are duly separated. Hence, the interior parts B and C of the abdominal cavity are well-visible in this image.

In contrast, figure 6 schematically shows a similar procedure as figure 4, with the difference that now a camera is used that is not a line-scan camera. Indeed, figure 6 indicates an area 30 that is imaged by this camera. This imaged area 30 has a larger height than the imaged area 28 of the line scan camera (see "h" in figure 4).

In the procedure of figure 6, only two images are taken in the time period between t0 and t3, namely an image at t0 of parts X, Y, Z, and A of the abdominal interior, and an image at t3 of parts A, B, C, and D of the abdominal interior.

A disadvantage of this procedure, in which no line-scan camera is used, is that parts B and C are imaged when they are at some distance from the ventral flap separator element 10 as a result of which the ventral flaps sit relatively close together at parts B and C. In the procedure of figure 4, when the image of part B is taken at t1, the ventral flaps at part B are roughly separated by a distance d1. However, in the procedure of figure 6, when the image of parts A, B, C, D is taken, the ventral flaps at part B are roughly separated by a distance d2 much smaller than d1. Hence, part B of the abdominal interior is more comprehensively imaged when a line-scan camera is used (figure 4) than a camera that is not a line-scan camera (figure 6).

Figure 7 shows the image that is formed by combining the two images taken in the procedure of figure 6. Clearly, this combined image of the abdominal interior is of lower quality, not only because contains an overlap in that part A is present twice in the image, which may complicate image analysis, but also because parts B and C are imaged with the ventral flaps sitting close together which limiting the view on these interior parts B and C of the abdominal cavity.

An additional advantage of the procedure of figure 4 is that it yields a more uniform image. The procedure of figure 6 relies on stitching together images of a substantial height. As a result, in each image, areas at the top of the image have a substantially different view point angle than areas at the bottom of the image. In other words, for an image having a substantial height, the angle of incidence on the line-scan camera of light that came from areas shown at the top of the image differs significantly from the angle of incidence on the line-scan camera of light that came from areas shown at the bottom of the image. When stitching a bottom of such image with a substantial height to a top of another image with a substantial height, there is a substantial mismatch between the view point angles at this border between the two images resulting in increased distortion. In the procedure of figure 4, each line image has a nearly constant view point angle across its height, meaning that these line images can be stitched together resulting in an overall image with little distortion. The stitching can be made nearly invisible.

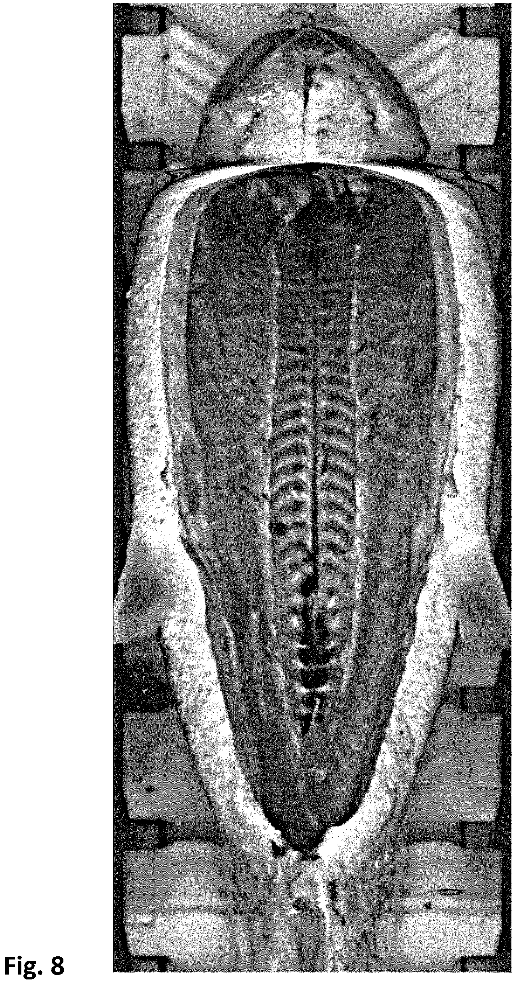

Figure 8 is an image that has been captured by a system according to an embodiment. In this image, along the entire length of the fish, the ventral flaps are well-separated as a result of which the image shows the interior of the gutted abdominal cavity very well.

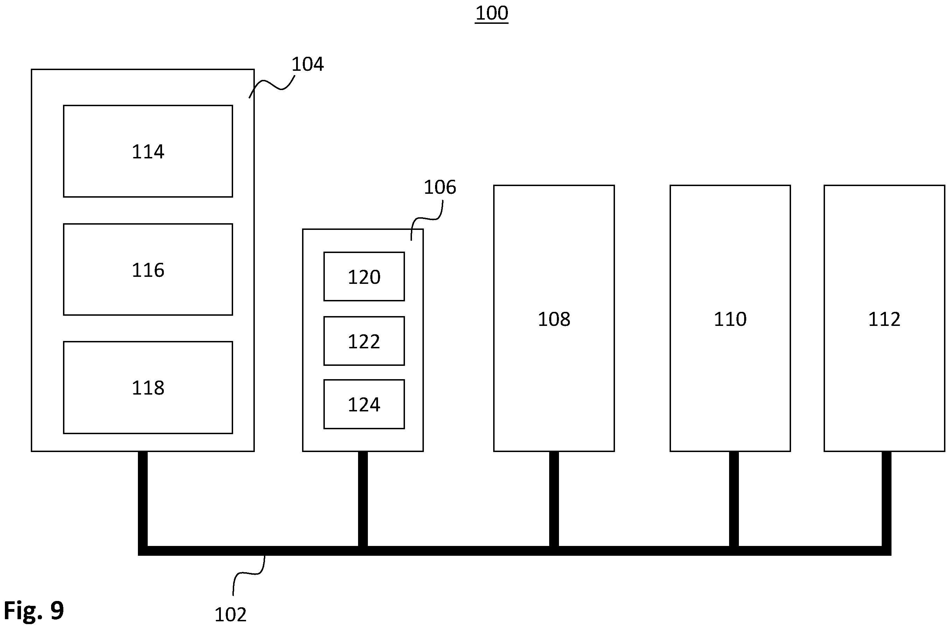

Figure 9 schematically illustrates a data processing 100, also referred to as a computer, according to an embodiment. The data processing system 100 may for example represent a controller for controlling the conveyor system and/or the line-scan camera and/or the ventral flap separator system referred to herein. Additionally or alternatively, the data processing system 100 can be implemented, for example, as a consumer device such as a smartphone, other mobile phone, tablet computer, wearable computing device (for example, a smart watch, eyeglasses, or a head wearable display), desktop computer, laptop computer, or implemented with distributed computing devices.

In data processing system 100, a system bus 102 connects the different components of the data processing system 100. In particular, the system bus 102 depicted in figure 9 connects the Central Processing Unit (CPU) 104, memory elements 106, input devices 108, output devices 110 and communication devices 112 with each other so that they can exchange information. The system bus 102 may be understood to serve both as data bus, address bus and control bus known in the art.

The CPU 104 is configured to perform steps as per the instructions comprised in a computer program. To illustrate, based on such instructions, the CPU may perform any of the computer-implemented methods described herein. Typically, the CPU 104 is embodied as a microprocessor, which can be implemented on a single metal-oxide-semiconductor integrated circuit chip. The CPU 104 comprises a control unit 114, an arithmetic logical unit (ALU) 116 and a plurality of registers 118.

The control unit 114 is configured to retrieve instructions from a main memory 120. Typically, the control unit 114 comprises a binary decoder to convert the retrieved instructions into timing and control signals that direct the operation of for example the ALU 116. ALU 116 is configured to perform logical operations, such as additions, subtraction, multiplication, division and Boolean operations, that are required for carrying out the instructions. The registers 118 are small memory elements that can be read and written at relatively high speed. A register may for example store an instruction, a storage address, or any other kind of data. In addition, the CPU may contain hardware caches known in the art (not shown). Preferably the CPU has different levels of caches. These hardware caches may be understood as an intermediate state between the faster registers 119 and the slower main memory 120.

Memory elements 106 comprise a main memory 120. The main memory 120, also referred to as primary storage in the art, has stored data that is directly accessible to the CPU 104. The CPU 104 may continuously read instructions, i.e. read computer programs, stored in the main memory 120 and execute these instructions. The main memory 120 is typically a random access memory (RAM).

Memory elements 106 further comprise so-called secondary storage 122, which may be embodied as one or more hard disk drives and/or as one or more solid state drives. Typically, these secondary storage is non-volatile. Further, the memory elements may comprise other storage devices 124, such as removable storage devices, e.g. CD, DVD, USB flash drives, floppy disks, et cetera.

Input devices 108 may be understood as devices that are used to provide information to the computer 100, in particular to the CPU 104. In turn, the computer can interpret this information as indicative of particular user requests or information. Non-limiting examples of input devices are a keyboard, a microphone, a joystick, a touch sensitive screen, a keyboard, a touch pad, a touch screen, a mouse or other pointing device, a scroll wheel, a click wheel, a dial, a button, a switch, a keypad, a sensor (for example, a motion sensor or an eye tracking sensor), a line-scan camera, et cetera.

Output devices 110 may be understood as devices that output information out of the computer and/or as devices that are controlled by the computer. Non-limiting examples of output devices 110 are a printer, a headphone, a loudspeaker, a motor-generator referred to herein, fish conveyor system, line-scan camera, ventral flaps separator system, et cetera. Another example of an output device is a display to display images generated by or delivered to the computer. The display can incorporate various image generation technologies, for example, a liquid crystal display (LCD), a light-emitting diode (LED), such as an organic light-emitting diode (OLED), a projection system, a cathode ray tube (CRT), or the like, together with supporting electronics (for example, digital-to-analog or analog-to-digital converters, or signal processors). A device such as a touch screen that functions as both input and output device can be used. User output devices 424 can be provided in addition to or instead of a display. Examples include indicator lights, speakers, tactile "display" devices, printers, and so on.

Communication devices 112 may be understood as devices that allow the computer system to communicate with other computers, such as with a server computer, client computer, or any other type of remote device. Communication devices 112 are for example configured to provide a connection to a wide area network (for example, the Internet) to which a WAN interface of a remote server system is also connected. Communication devices 112 can include a wired interface (for example, ethernet) and/or a wireless interface implementing various RF data communication standards, such as Wi-Fi, Bluetooth, or cellular data network standards (for example, 3G, 4G, 5G, 60 GHz, or LTE). Non-limiting examples of communication devices 112 include modems, cable modems, ethernet cards, Bluetooth modules, et cetera.

Many of the features described in this specification can be implemented as processes that are specified as a set of program instructions encoded on a computer readable storage medium. When these program instructions are executed by one or more processors, they cause the processors to perform various operations indicated in the program instructions. Examples of program instructions or computer code include machine code, such as is produced by a compiler, and files including higher-level code that are executed by a computer, an electronic component, or a microprocessor using an interpreter. Through suitable programming, processor 104 can provide various functionality for computer 100, including any of the functionality described herein as being performed by a server or client, or other functionality associated with message management services.

It will be appreciated that computer 100 is illustrative and that variations and modifications are possible. Computer systems used in connection with the present disclosure can have other capabilities not specifically described here. Further, while computer 100 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, for example, by programming a processor or providing appropriate control circuitry, and various blocks might or might not be reconfigurable depending on how the initial configuration is obtained. Implementations of the present disclosure can be realized in a variety of apparatus, including electronic devices implemented using any combination of circuitry and software.

While the invention has been illustrated and described in detail in the drawings and foregoing description, such illustration and description are to be considered illustrative or exemplary and not restrictive. The invention is not limited to the disclosed embodiments.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to obtain an advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A system for capturing an image of an abdominal interior, i.e. an interior of an abdominal cavity, of a gutted fish, the system comprising
a ventral flap separator system that is configured to separate ventral flaps of the fish herewith exposing the abdominal interior of the gutted fish, and
an imaging system that is configured to capture an image of the exposed abdominal interior, wherein
the imaging system comprises a line-scan camera.

2. The system according to claim 1, wherein the line-scan camera is configured to capture the image of the exposed abdominal interior by sequentially capturing line images of respective parts of the exposed abdominal interior.

3. The system according to claim 2, wherein the line-scan camera is configured to stitch the captured line images together to form the image of the exposed abdominal interior.

4. The system according to claim 2 or 3, wherein
the ventral flap separator system is configured to locally separate the ventral flaps at a first position along a length of the fish herewith exposing a first part of the abdominal interior and thereafter locally separate the ventral flap at a second position along the length of the fish herewith exposing a second part of the abdominal interior, the second position being different from the first position, wherein
the line-scan camera is configured to capture a first line image of the exposed first part of the abdominal interior and a second line image of the exposed second part of the abdominal interior.

5. The system according to claim 4, wherein
the length of the fish extends in a longitudinal direction, the system comprising
a conveyor system that is configured to move the gutted fish along the longitudinal direction relative to the ventral flap separator system so that the ventral flap separator system locally separates the ventral flaps at a progressing position along the length of the fish herewith exposing respective parts of the abdominal interior.

6. The system according to claim 5, wherein the line-scan camera is configured to sequentially capture line images of an area having a fixed position relative to the ventral flap separator system when the ventral flap separator system is locally separating the ventral flap at the progressing position along the length of the fish.

7. The system according to any of the preceding claims 2-6, wherein each line image has an image width and an image height, wherein a ratio between the image width and image height is at least 50, preferably at least 100, more preferably at least 200, even more preferably at least 500, most preferably 1000.

8. The system according to any of the preceding claims, wherein
the line-scan camera has a field of view volume, and wherein
a cross-section of the field of view volume in a frontal plane of the fish is shaped as a line having a height and a width, the width being at least 5 times greater than the height and the height being at most 2 mm, preferably at most 1 mm, more preferably at most 0.5 mm.

9. The system according to any of the preceding claims, wherein an optical axis of the line-scan camera makes an angle between 30 and 75 degrees with a frontal plane of the fish and/or with a horizontal plane, preferably between 45 and 60 degrees, more preferably between 50 and 55 degrees.

10. The system according to any of the preceding claims, wherein the line-scan camera is configured to capture at least 300 line images per second, preferably at least 750 line images per second, more preferably at least 1000 line images per second and/or 1 line image per 10 mm displacement of the fish relative to the line-scan camera, preferably at least 1 line image per 5 mm displacement of the fish relative to the line-scan camera, and more preferably 1 line image per mm displacement of the fish relative to the line-scan camera.

11. The system according to any of the preceding claims, further comprising one or more light sources configured to illuminate the exposed abdominal interior.

12. A fish gutting system comprising
one or more gutting tools for gutting a fish, and
a system according to any of the preceding claims, and
a data processing system that is configured to perform a step of:
- based on the captured image of the exposed abdominal interior, determining that the fish has been properly gutted.

13. A method for capturing an image of an abdominal interior, i.e. an interior of an abdominal cavity, of a gutted fish, the method comprising
a line-scan camera capturing the image of the abdominal interior.

14. The method according to claim 13, further comprising
separating ventral flaps of the fish herewith exposing the abdominal interior of the gutted fish, and
the line-scan camera capturing the image of the exposed abdominal interior.

15. The method according to claim 14, further comprising
locally separating the ventral flaps at a first position along a length of the fish herewith exposing a first part of the abdominal interior, and
the line-scan camera capturing a first line image of the exposed first part of the abdominal interior, and then
locally separating the ventral flap at a second position along the length of the fish herewith exposing a second part of the abdominal interior, the second position being different from the first position, and
the line-scan camera capturing a second line image of the exposed second part of the abdominal interior.
